# FASCICULE DE BREVET EUROPEEN

(11) **EP 1 354 463 B1**
(45) Date de publication et mention de la délivrance du brevet: **11.03.2009**
(21) Numéro de dépôt: 01994014.7
(22) Date de dépôt: 06.11.2001
(51) Int. Cl.: H04M 1/247, H04M 1/253, H04M 1/60

(54) **SYSTEME TELEPHONIQUE UTILISANT UN OU PLUSIEURS MICRO-ORDINATEURS**
TELEFONSYSTEM DAS EIN ODER MEHRERE MIKROCOMPUTER BENUTZT
TELEPHONE SYSTEM USING ONE OR SEVERAL MICRO-COMPUTERS

(30) Priorité: 09.11.2000 FR 0014574
(43) Date de publication de la demande: 22.10.2003
(73) Titulaire: Le Pabic, Jean-Pierre, F-92500 Rueil Malmaison (FR)
(72) Inventeur: Le Pabic, Jean-Pierre, F-92500 Rueil Malmaison (FR)
(74) Mandataire: Schmit, Christian Norbert Marie
(86) Numéro de dépôt international: PCT/FR2001/003417
(87) Numéro de publication internationale: WO 2002/039702

(56) Documents cités:
- WO-A-95/22183
- DE-A- 19 636 819
- GB-A- 2 318 703
- GB-A- 2 346 761

## Description

La présente invention concerne un système téléphonique faisant coopérer au moins un terminal téléphonique, un micro-ordinateur et un ensemble de modules logiciels implanté dans le micro-ordinateur.

D'une façon générale, on sait qu'il a déjà été proposé un système de ce genre faisant intervenir un terminal téléphonique haut de gamme équipé de microprocesseurs et présentant de nombreuses fonctionnalités propres à la fonction téléphonique, y compris la fonction de télécopie et de transmission de données (Modem). Ce terminal est couplé à un micro-ordinateur de bureau qui ne joue, pour l'essentiel, que le rôle de terminal d'entrée/sortie et comprend les logiciels et les circuits fax/modem traditionnellement liés à un boîtier modem. Il en découle que le prix du terminal téléphonique est tout naturellement élevé.

Il existe également un système téléphonique construit autour d'un réseau Ethernet sur lequel sont connectés un serveur dédié, des passerelles éventuelles vers le réseau téléphonique commuté ou des réseaux IP (Internet, Intranet) longue distance ainsi que des postes téléphoniques. Ces postes téléphoniques sont raccordés directement sur le câble Ethernet. L'ensemble fonctionne alors comme un autocommutateur (PABX).

Il s'avère que ce concept élimine du marché l'ensemble des possesseurs de micro-ordinateurs non connectés sur le réseau local, ce qui recouvre la quasi totalité des particuliers et des très petites entreprises, c'est à dire la plus grande partie des acheteurs potentiels. En outre, la connexion Ethernet renchérit sensiblement le coût du poste téléphonique tandis qu'un serveur est dédié à l'exécution des programmes téléphoniques.

Dans l'état de la technique on connaît aussi le document DE 196 36 819 A, Ce document divulgue un système téléphonique comprenant un terminal téléphonique raccordé à une ligne téléphonique et couplé à un micro-ordinateur. Les documents GB 2 318.703 A et WO 95 22183 A divulguent des systèmes téléphoniques similaires à celui de DE 196 36 819 A.

Toutefois les systèmes téléphoniques divulgués dans ces documents présentent un inconvénient. En effet, ce type de système téléphonique ne permet pas une connexion directe entre un groupe de terminaux et le micro-ordinateur, car chaque micro-ordinateur est propre à un terminal. Ainsi, l'intervention du terminal raccordé est toujours nécessaire comme intermédiaire pour établir des communications entre les autres terminaux et le micro-ordinateur.

L'invention a donc plus particulièrement pour but de supprimer ces inconvénients.

Elle part de la constatation que l'arrivée du bus haute vitesse, par exemple le bus USB en équipement standard, procure un moyen de communication économique dont les performances sont compatibles avec la puissance de calcul du processeur.

Elle propose donc une architecture particulière dont plusieurs terminaux, parmi lesquels au moins l'un est raccordé à la ligne téléphonique, c'est-à-dire un terminal du premier type, sont connectés sur le bus à haut débit d'un micro-ordinateur, et dont éventuellement plusieurs micro-ordinateurs interconnectés font partie du système, de façon à ce qu'un groupe de terminaux parmi lesquels au moins l'un est raccordé à la ligne téléphonique, soit connecté au bus de chaque micro-ordinateur.

Cette connexion directe d'un groupe de terminaux sur le bus permet de partager les ressources d'un seul micro-ordinateur sans nécessiter l'intervention permanente du terminal raccordé à la ligne téléphonique, comme dans les documents cités,

L'invention a donc pour objet un système téléphonique comprenant
- une pluralité de terminaux téléphoniques dont au moins l'un est raccordé à une ligne téléphonique (LTA), qui constituent un ou plusieurs groupes,
- au moins un micro-ordinateur (10) équipé d'un ensemble de modules logiciels et d'un bus à haut débit
- chacun desdits terminaux d'un groupe étant connecté au même micro-ordinateur par l'intermédiaire dudit bus haut débit,
chacun desdits terminaux comprenant:
- un sous-ensemble contrôleur de bus USB associé à un microcontrôleur (1),
- un sous ensemble poste comprenant un combiné et ses circuits d'interface comportant un convertisseur numérique/analogique (4, 5), un adaptateur ainsi qu'un clavier de numérotation associé à un afficheur,
- le terminal raccordé comportant en outre un sous ensemble ligne comprenant des circuits d'interfaces avec la ligne téléphonique (LTA), le sous ensemble poste et le sous-ensemble ligne du terminal raccordé étant connectés à un bus adresse/données/audio (8) du sous ensemble contrôleur de bus (1), et dont
- la liaison entre le sous-ensemble contrôleur de bus de chaque terminal et le micro-ordinateur (10) associé comprend au moins trois canaux, à savoir :

- un canal (A) pour le transfert des données entre le micro-ordinateur (10) et les terminaux téléphoniques,
- un canal audio (C) affecté à la liaison bidirectionnel, combiné/micro-ordinateur
- et pour ce qui concerne le terminal raccordé à la ligne téléphonique un canal audio (B) affecté à la liaison micro-ordinateur/ligne téléphonique,
les susdits canaux permettant d'établir des communications téléphoniques entre ladite ligne et lesdits terminaux et/ou entre lesdits terminaux.

En effet, elle permet d'éviter d'avoir deux réseaux distincts l'un pour le téléphone (ce réseau étant piloté par un autocommutateur) et l'autre pour le système informatique (comprenant éventuellement un serveur) : seul le réseau informatique suffit.

Il s'ensuit une économie très importante tant en ce qui concerne le matériel que la pose du réseau.

En outre, le système selon l'invention pourra utiliser un routeur pour assurer des communications téléphoniques au travers du réseau IP (Internet ou Intranet).

Des modes d'exécution de l'invention seront décrits ci-après, à titre d'exemples non limitatifs, avec référence aux dessins annexés dans lesquels :
La figuré 1 est un schéma de principe d'un terminal téléphonique selon l'invention pouvant se connecter à une ligne analogique (traits pleins) ou à une ligne numérique (traits interrompus) ;
La figure 2 est un schéma de principe d'un terminal simplifié ;
La figure 3 est un schéma synoptique des principaux modules logiciels pouvant équiper le micro-ordinateur auquel sont couplés les terminaux selon l'invention ;
La figure 4 est une représentation schématique d'une configuration faisant intervenir un micro-ordinateur et plusieurs terminaux selon l'invention;
La figure 5 est une représentation schématique d'une configuration faisant intervenir plusieurs micro-ordinateurs montés en réseau ;
La figure 6 est un schéma illustrant un exemple de configuration matérielle d'un autocommutateur réparti utilisable dans le réseau de la figure 5 ;
La figure 7 est une représentation schématique illustrant la découpe logicielle d'un micro-ordinateur servant d'administrateur d'un réseau ;
La figure 8 est un schéma synoptique des modules logiciels des micro-ordinateurs destinés aux utilisateurs dans le montage du réseau représenté figure 5.

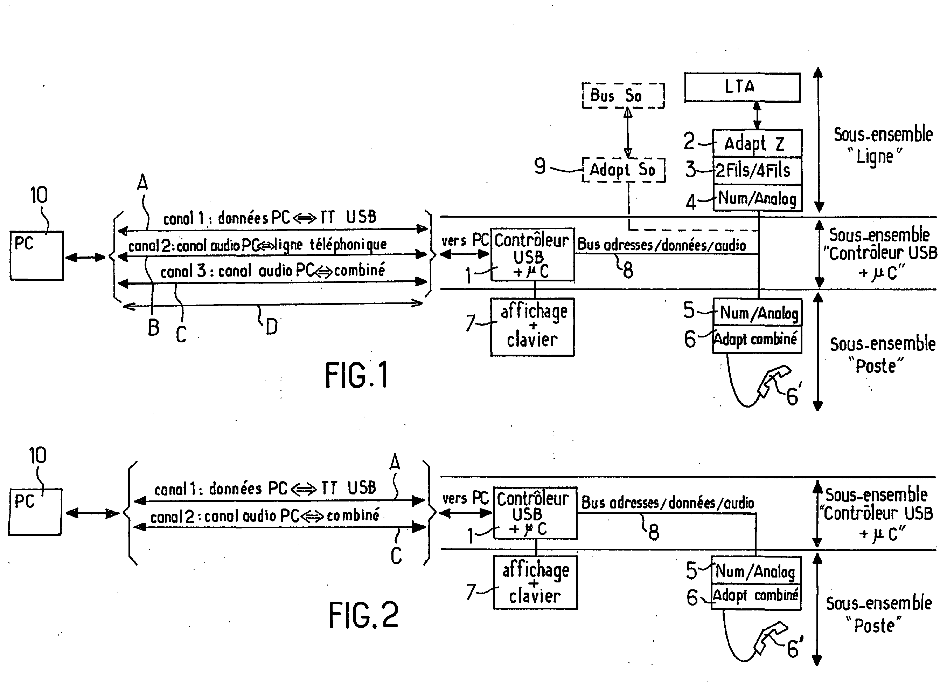

Dans l'exemple représenté sur la figure 1, le terminal selon l'invention comprend trois sous-ensembles, à savoir :
- un sous-ensemble "contrôleur de bus USB" associé à un microcontrôleur 1,
- un sous-ensemble "ligne" comprenant des circuits d'interface 2, 3 avec la ligne téléphonique analogique LTA (adaptateur d'impédance et convertisseur 2/4 fils) et un convertisseur numérique/analogique 4,
- un sous-ensemble "poste" comprenant les circuits d'interface combiné (convertisseur numérique/analogique. 5 et adaptateur 6) et clavier de numérotation associé à un afficheur 7.

Les sous-ensembles "ligne" et "poste" sont connectés à un bus 8 adresses/données/audio du contrôleur de bus USB 1 par l'intermédiaire de leurs convertisseurs numérique/analogique 4, 5 respectifs. Néanmoins, ils sont fonctionnellement indépendants et pourraient être séparés physiquement. Seules des raisons d'économie et de commodité font qu'il est préférable de les implanter dans un même boîtier.

Dans cet exemple, le sous-ensemble "ligne" comprend en outre un adaptateur So 9 assurant une liaison numérique entre le bus 8 et un réseau de télécommunication numérique à intégration de services (RNIS) par exemple sur le bus So (4 fils) de ce réseau. Bien entendu, cette liaison numérique (en traits interrompus) peut être prévue en complément ou en substitution à la ligne analogique 2, 3, 4, LTA.

En l'absence de raccordement à un micro-ordinateur, le terminal téléphonique (1 à 9) est alimenté par la ligne téléphonique LTA et peut émettre et recevoir des appels, à l'instar de tout poste téléphonique de base classique.

Dans cet exemple, la liaison entre le contrôleur 1 et le micro-ordinateur PC 10 comprend quatre canaux, à savoir : un canal A pour le transfert des données entre le micro-ordinateur 10 et le terminal téléphonique 1 à 9, trois canaux audio B, C, D, dont deux B, C affectés à la liaison micro-ordinateur/ligne téléphonique et un canal D affecté à la liaison combiné/micro-ordinateur/combiné téléphonique 6'.

Le terminal téléphonique représenté sur la figure 2 est une version simplifiée du terminal de la figure 1 dans laquelle le sous-ensemble "ligne" n'est pas implanté. Ce terminal convient dans le cas où il est connecté à un bus ou à un réseau sur lequel sont connectés plusieurs terminaux dont l'un au moins est du type de celui illustré sur la figure 1 et comprend un sous-ensemble "ligne". En effet, dans ce cas, il n'est pas nécessaire d'avoir autant de lignes que de postes téléphoniques. La liaison entre le contrôleur 1 et le micro-ordinateur 10 ne comprend plus que deux canaux, à savoir les canaux A et C.

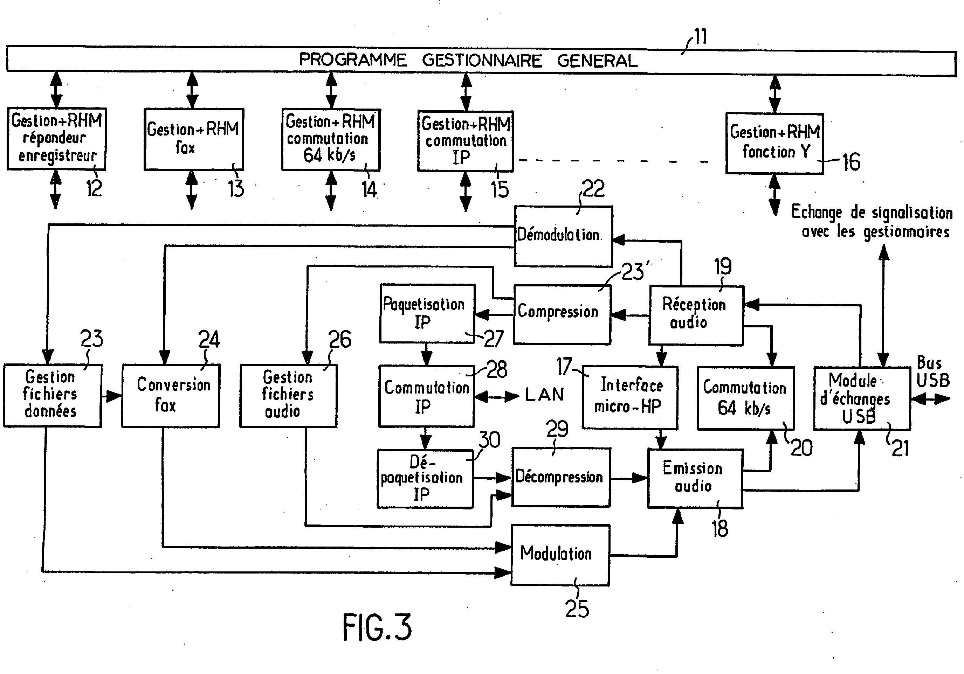

Bien entendu, le micro-ordinateur 10 devra inclure des programmes fonctionnels permettant d'assurer la gestion des terminaux téléphoniques notamment en ce qui concerne les communications internes (entre les terminaux entre eux via le micro-ordinateur 10) et externes (entre les terminaux 1 à 9 et la(ou les) ligne(s) téléphonique(s) LTA, So). Ainsi, ces programmes fonctionnels pourront comprendre les modules suivants, indiqués schématiquement sur la figure 3 :
- Module d'échange USB 21 entre le micro-ordinateur 10 et le terminal téléphonique 1 à 9 ;
- Modules d'émission et de réception audio 18, 19 à 64 kb/s ou à 128 kb/s ;
- Module de commutation 20 à 64 kb/s ou à 128 kb/s ;
- Module d'interface 17 avec le micro et les haut-parleurs du micro-ordinateur. Ce module comprend les programmes d'échantillonnage et de compression du son 22 de largeur de bande 7 kHz utilisables pour les communications numériques de bout en bout ;
- Modules de compression et de décompression 23', 29 de la voix ;
- Modules de paquetisation et dépaquetisation IP (Internet, Intranet) 27, 30 ;
- Module de commutation IP (Internet, Intranet) 28 ;
- Modules de modulation et démodulation des données 25, 22 ;
- Module de gestion des fichiers audio 26 ;
- Module de gestion des fichiers de données 23 ;
- Module de conversion des fichiers de données en format télécopie 24 ;
- Modules de gestion et de relations homme/machine RHM des différentes fonctions 12 à 16 ;
- Programme gestionnaire général 11.

D'une façon plus précise, sur cette figure 3, le bloc 11 représente le programme gestionnaire général auquel peuvent être raccordés les différents modules, à savoir : un module de gestion répondeur/enregistreur 12, un module de gestion fax 13, un module 14 de gestion des commutations pour transmissions à 64 kb/s, un module 15 de gestion des communications pour des communications sur les réseaux IP (Intranet/Internet) et un module 16 de gestion et de RHM des autres fonctions.

Dans cet exemple, l'interface micro/haut-parleur 17 est connecté à des modules d'émission 18 et de réception 19 qui pilotent un module de commutation à 64 kb/s 20.

L'unité de réception audio 19 reçoit des informations en provenance du module d'échanges USB 21 qui gère directement les échanges avec le bus USB du micro-ordinateur 10.

L'unité de réception audio 19 transmet ses informations à un module de démodulation 22 et à un module de compression 23'.

Le module de démodulation 22 transmet les informations démodulées à un module de gestion des fichiers 23 et/ou à un module de conversion de fax 24, ces deux modules étant connectés à l'unité d'émission audio 18 par l'intermédiaire d'un module de modulation 25.

Le module de compression transmet les informations compressées, d'une part, à un module de gestion des fichiers audio 26 et, d'autre part, à un ensemble comprenant successivement un module de paquetisation IP 27 et un module de commutation IP 28 connecté bidirectionnellement au réseau local LAN.

Le module de commutation IP 28 transmet en outre des informations à un module de décompression 29 (qui reçoit également des informations du module gestion de fichier audio 26), via un module de dépaquetisation IP 30.

Le module d'émission audio 18 reçoit les informations décompressées émanant du module de décompression 29 en plus des informations provenant du module de modulation 25.

Bien entendu, dans le cas d'utilisateurs indépendants, l'installation pourra se limiter à un seul terminal téléphonique USB raccordé sur un micro-ordinateur pouvant également servir aux communications : données et télécopie, arrivée et départ. L'utilisateur pourra bénéficier au choix, de tout ou partie des modules fonctionnels précédemment décrits.

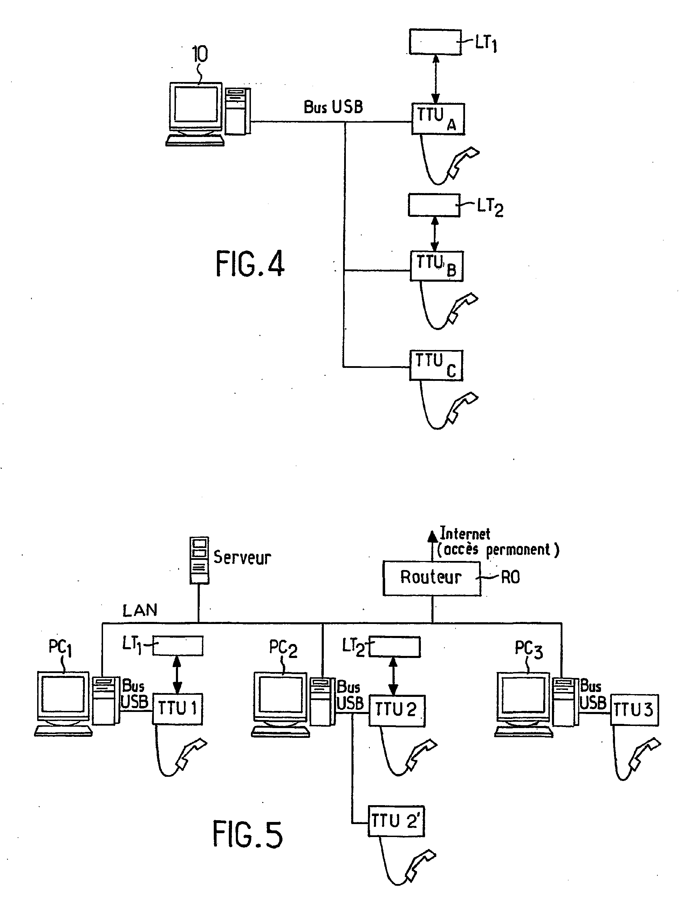

Dans le cas de très petites sociétés, l'équipement représentatif pourra être constitué d'un micro-ordinateur 10, essentiellement utilisé par la secrétaire, d'une ou deux lignes téléphoniques numériques ou analogiques (ici LT₁, LT₂) et de quelques terminaux téléphoniques (figure 4).

Tous les terminaux TTUA, TTUB, TTUC, dont seulement deux TTUA, TTUB sont équipés d'une ligne téléphonique (LT₁, LT₂)_{,} sont raccordés sur le bus USB du micro-ordinateur 10.

Le micro-ordinateur 10 joue alors le rôle d'autocommutateur à petite capacité dont la capacité est, dans cet exemple, fixée à deux lignes et trois terminaux et dont deux, les terminaux TTUA et TTUB, sont équipés d'une ligne téléphonique (LT₁, LT₂).

Le fonctionnement de base de cet autocommutateur de petite capacité sera explicité ci-après :
1) L'un des terminaux (par exemple le terminal TTUA) veut établir une communication départ. Sur composition du préfixe d'appel extérieur, il demande une ligne au micro-ordinateur 10 qui lui répond par la négative si les deux lignes LT₁, LT₂ sont occupées. Si ce n'est pas le cas, le micro-ordinateur 10 établit la connexion audio entre une ligne libre et le terminal correspondant au travers de son module commutation. Il commande ensuite le décrochage de la ligne sélectionnée. Le terminal TTUA peut alors numéroter.
2) Un appel externe arrivé pris par l'un des terminaux, par exemple, le terminal TTUA, est pour un autre terminal, par exemple le terminal TTUB. On considère le cas d'exploitation où les sonneries de l'ensemble des terminaux libres sont activées sur détection de sonnerie sur une ligne. Le premier terminal qui décroche prend l'appel. Après mise en garde de la communication, l'utilisateur du terminal TTUA compose le numéro du terminal TTUB. Au décroché de ce dernier et après raccrochage du terminal TTUA, la connexion est établie par le micro-ordinateur 10.
3) Le terminal TTUC (sans ligne) veut établir une communication départ : Ce cas est similaire au cas n° 1.
4) Le terminal TTUC veut établir une communication locale avec le terminal TTUB. L'utilisateur du terminal TTUC compose le numéro du terminal TTUB. Au décroché de ce dernier, la connexion est établie par le micro-ordinateur 10.

Avec trois terminaux, le micro-ordinateur peut donc avoir au maximum à commuter trois communications téléphoniques (deux communications externes et une communication locale).

Fréquemment, dans les petites sociétés, un réseau local LAN relie les différents micro-ordinateurs PC₁ à PC₃ de l'entreprise et, dans certains cas, un routeur RO offre un accès spécifique à Internet (figure 5). Chaque poste de travail (micro-ordinateurs PC₁ à PC₃) peut être équipé d'un ou de plusieurs terminaux téléphoniques TTU1 à TTU3, chacun étant doté ou non d'un accès au réseau téléphonique commuté RTC (lignes téléphoniques analogiques ou numériques LT₁, LT₂).

Les communications entre postes de travail différents s'effectuent alors au travers du réseau local LAN exactement comme elles s'effectuaient au travers du bus USB dans le cas des très petites entreprises. La commutation s'effectue cependant sous le protocole IP (Intemet/Intranet).

Les grandes sociétés possèdent souvent plusieurs réseaux locaux, chacun étant affecté à un service. Chaque entité ainsi définie peut être équipée de la même façon qu'une petite société du type de celle précédemment évoquée, les lignes téléphoniques RTC pouvant être raccordées aux équipements de postes de l'autocommutateur de l'entreprise. Les communications téléphoniques étant dans la plupart des cas majoritairement internes au service, l'équipement en terminaux USB peut permettre de faire des économies sensibles sur la taille du commutateur d'entreprise. Il n'est d'ailleurs pas exclu de doter certains postes d'une ligne téléphonique directe RTC, l'autocommutateur ne servant plus alors qu'aux communications inter-services.

Avec la taille de l'entreprise, les possibilités de messagerie vocale prennent toute leur importance. En effet, ce service est actuellement très généralement implanté et est une source de coûts non négligeables dont l'équipement en terminaux téléphoniques USB permet l'économie.

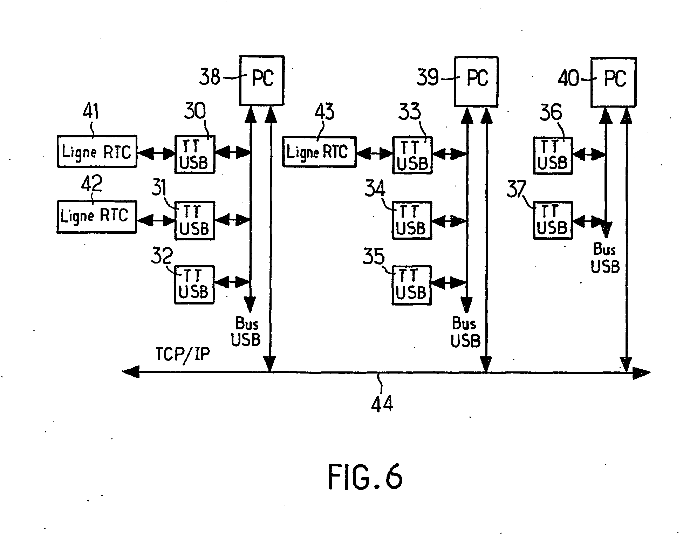

Comme précédemment mentionné, l'invention permet la réalisation d'un autocommutateur réparti sur un réseau local à base de micro-ordinateurs et de terminaux téléphoniques USB tel que celui qui est illustré sur la figure 6.

Dans cet exemple, cet autocommutateur fait intervenir huit terminaux téléphoniques USB 30 à 37 dont trois seulement possèdent une ligne téléphonique 40 à 43.

Les micro-ordinateurs 38 à 40, de type PC, sont au nombre de trois et sont reliés entre eux par une liaison Ethernet sous TCP/IP 44. Chaque micro-ordinateur PC₁ 38 à 40 dispose d'un port USB et d'une carte Ethernet. Trois lignes téléphoniques RTC 41, 42, 43 sont respectivement connectées aux terminaux 30, 31, 33. Chaque terminal téléphonique USB 30 à 37 est connecté à un micro-ordinateur 38, 39, 40, par l'intermédiaire d'une liaison USB et, éventuellement, à une ligne téléphonique RTC.

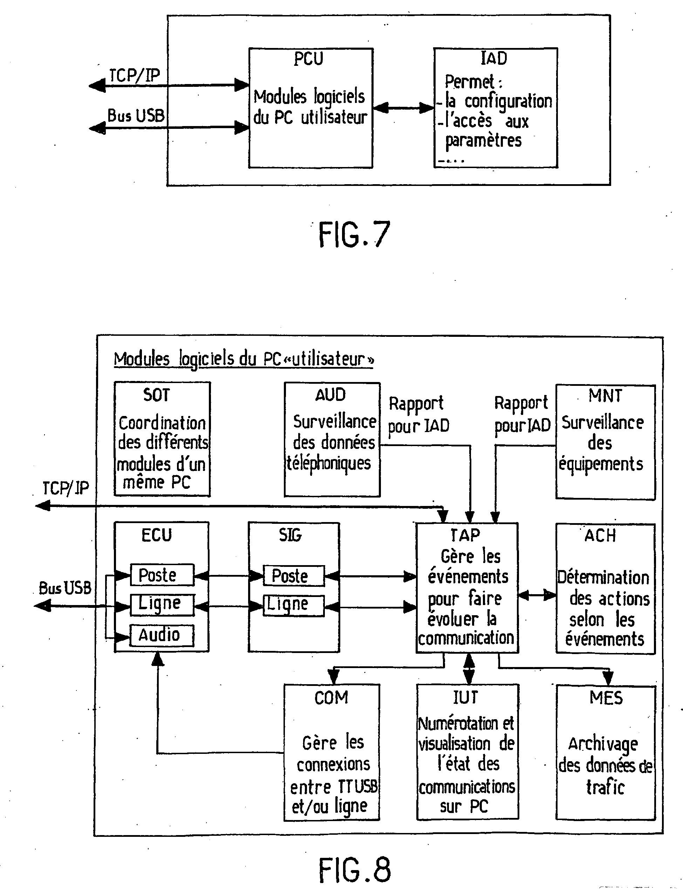

Le logiciel du système d'évaluation de l'autocommutateur réparti est découpé en modules et sous-modules. Dans l'exemple illustré sur la figure 8, il se décompose en onze modules :

### 1) Module "échanges USB" (ECU)

Ce module est chargé d'identifier et de mettre en forme les messages circulant sur le bus USB. Il analyse l'en-tête de chaque message afin d'aiguiller les données. Il effectue également une traduction de l'adresse physique d'un terminal téléphonique USB en son adresse logique. Il comprend trois sous-modules :
- le sous-module "poste" qui transmet et reçoit les informations venant du sous-module "poste" du module "signalisation",
- le sous-module "ligne" qui transmet et reçoit les informations venant du sous-module "ligne" du module "signalisation",
- le sous-module "audio" qui gère l'émission et la réception d'échantillons de parole entre le terminal téléphonique USB et le PC.

### 2) Module "signalisation" (SIG)

Ce module gère la signalisation téléphonique du terminal téléphonique USB. Il comprend deux sous-modules :
- le sous-module "poste" qui analyse et traite les événements venant du sous-module "poste" du module "échange USB" pour les transmettre au module "traitement d'appel". Le module "traitement d'appel" lui retourne les actions à effectuer suivant l'état de la communication,
- le sous-module "ligne" qui analyse et traite les événements venant du sous-module "ligne" du module "échange USB" pour les transmettre au module "traitement d'appel". Le module "traitement d'appel" lui retourne les actions à effectuer suivant l'état de la ligne.

### 3) Module "traitement d'appel" (TAP)

Ce module est un module coordinateur, son rôle est de faire évoluer l'état des communications. Il connaît l'état des terminaux téléphoniques USB qu'il gère.

Ce module communique avec les différents modules "traitement d'appel" des autres PC du réseau afin de connaître l'état des différents terminaux téléphoniques USB. Il est donc en mesure de choisir une ligne RTC libre lors d'un appel sortant.

Il informe également les différents modules "traitement d'appel" de l'état des terminaux téléphoniques USB dont il a la charge.

Ce module "traitement d'appel" interroge le module "acheminement" pour connaître les actions à prendre en fonction de l'événement et de l'état de la communication. Il génère ainsi une liste d'actions.

Le module "traitement d'appel" envoie les messages d'alerte (venant des modules "maintenance" et "audit") vers le PC "administrateur" par l'intermédiaire de la liaison TCP/IP.

### 4) Module "acheminement" (ACH)

Ce module est un module de données. Il contient des informations sur les terminaux téléphoniques du système (par exemple terminal téléphonique à restriction d'appel ou terminal téléphonique à appel au décroché). Il contient également les actions à prendre en fonction du terminal téléphonique considéré, des événements et de l'état de la ligne. Il comprend le plan de numérotage.

### 5) Module "commutation" (COM)

Ce module effectue et coupe les connexions audio à l'intérieur du micro-ordinateur PC selon les directives du traitement d'appel.

### 6) Module "système opératoire téléphonique" (SOT) (non représenté)

Ce module coordonne les modules téléphoniques à l'intérieur d'un même PC. Il gère les temporisations et lance chaque module logiciel avec la récurrence nécessaire.

### 7) Module "maintenance" (MNT)

Ce module interroge régulièrement les différents modules ayant des interfaces matériels. Ces interfaces effectuent les contrôles demandés et renvoient un compte-rendu. En cas de problème, il envoie un message d'alerte au module d'administration.

### 8) Module "audit" (AUD)

Ce module s'occupe de la vérification de la cohérence des données téléphoniques. En cas de problème, il envoie un message d'alerte au module d'administration.

### 9) Module "mesure" (MES)

Ce module archive l'ensemble des données de trafic concernant les terminaux téléphoniques raccordés sur le bus USB du PC. Sur demande du module d'administration, il effectue des traitements sur ces données.

### 10) Module "interface utilisateur" (IUT)

Ce module permet de visualiser de façon élémentaire l'état des communications.

### 11) Module "interface administrateur" (IAD)

Ce module, présent uniquement dans la machine d'administration, permet de configurer l'autocommutateur réparti.

Chaque PC "utilisateur" du réseau est équipé de l'ensemble des modules, à l'exception du module "interface administrateur". Ce module qui est illustré sur la figure 7 est présent uniquement sur le PC "administrateur" du réseau, en complément des autres modules logiciels des PC utilisateurs (bloc PCU) qui communiquent entre eux grâce au bus USB et à des liaisons Internet/Intranet TCP/IP.

L'autocommutateur réparti permet notamment :
- d'aiguiller un appel entrant sur le premier terminal téléphonique USB d'une liste de terminaux téléphoniques préalablement définie. Cette liste contient l'ensemble des terminaux téléphoniques du réseau. Si le premier terminal téléphonique est occupé, l'appel entrant est alors dirigé vers le second terminal téléphonique de la liste, et ainsi de suite jusqu'au dernier terminal de la liste.
- de passer une communication vers l'extérieur, une ligne RTC libre est alors choisie,
- d'établir une communication locale entre deux terminaux téléphoniques USB sur le même bus USB ou par l'utilisation de la liaison Ethernet sous TCP/IP,
- de faire un transfert d'une communication d'un terminal téléphonique USB à un autre terminal téléphonique USB.

Ces différentes fonctionnalités sont traitées par logiciel dans le calculateur et peuvent s'effectuer de façons simultanées et indépendantes.

Actuellement, le débit d'un bus USB atteint 12 Mo/s, ce qui est largement supérieur au débit maximum d'une conversation téléphonique (au moins 128 kbits/s).

Les informations sur le bus USB contiennent, en plus de l'information utile :
- une trame de synchronisation,
- un en-tête de message,
- un contrôle d'erreur.

La compression de la voix à l'intérieur du PC peut permettre d'obtenir une largeur de bande d'au moins 128 kbit/s.

## Revendications

1. Système téléphonique comprenant:
- une pluralité de terminaux téléphoniques dont au moins l'un est raccordé à une ligne téléphonique (LTA), qui constituent un ou plusieurs groupes,
- au moins un micro-ordinateur (10) équipé d'un ensemble de modules logiciels et d'un bus à haut débit
- chacun desdits terminaux d'un groupe étant connecté au même micro-ordinateur par l'intermédiaire dudit bus haut débit
chacun desdits terminaux comprenant:
- un sous-ensemble contrôleur de bus USB associé à un microcontrôleur (1),
- un sous-ensemble poste comprenant un combiné et ses circuits d'interface comportant un convertisseur numérique/analogique (4, 5), un adaptateur ainsi qu'un clavier de numérotation associé à un afficheur,
- le terminal raccordé comportant en outre un sous ensemble ligne comprenant des circuits d'interfaces avec la ligne téléphonique (LTA), le sous ensemble poste et le sous-ensemble ligne du terminal raccordé étant connectés à un bus adresse/données/audio (8) du sous ensemble contrôleur de bus (1), et dont
- la liaison entre le sous-ensemble contrôleur de bus de chaque terminal et le micro-ordinateur (10) associé comprend au moins trois canaux, à savoir:
- un canal (A) pour le transfert des données entre le micro-ordinateur (10) et les terminaux téléphoniques,
- un canal audio (C) affecté à la liaison bidirectionnel, combiné/micro-ordinateur
- et pour ce qui concerne le terminal raccordé à la ligne téléphonique un canal audio (B) affecté à la liaison micro-ordinateur/ligne téléphonique,
les susdits canaux permettant d'établir des communications téléphoniques entre ladite ligne et lesdits terminaux et/ou entre lesdits terminaux.

2. Système selon la revendication 1,
**caractérisé en ce que** le terminal (TTUA) raccordé à la ligne téléphonique est conçu de manière à émettre et recevoir des appels téléphoniques même en cas de coupure de courant.

3. Système selon l'une des revendications 1 et 2,
**caractérisé en ce que** le sous-ensemble "ligne" comprend un convertisseur numérique/analogique dans le cas d'une ligne téléphonique analogique (LTA) et/ou un adaptateur destiné à assurer une liaison numérique entre le bus (8) et un réseau de télécommunication numérique à intégration de services (bus So).

4. Système selon la revendication 1,
**caractérisé en ce que** ledit micro-ordinateur (10) est programmé de manière à jouer le rôle d'un autocommutateur de petite capacité dont la capacité est égale au nombre de terminaux téléphoniques, et à effectuer les séquences opératoires suivantes :
- dans le cas où un premier terminal (TTUA) veut établir une communication départ, sur composition du préfixe d'appel extérieur, il demande une ligne au micro-ordinateur (10) qui répond par la négative si les deux lignes (LT₁, LT₂) sont occupées (et éventuellement les autres lignes) ; si ce n'est pas le cas, il établit une connexion audio entre une ligne libre par exemple (LT₂) et le terminal (TTUA) au travers de son module de commutation ; il commande ensuite le décrochage de la ligne sélectionnée de sorte que ledit premier terminal (TTUA) peut numéroter;
- dans le cas où un appel extérieur arrivé pris par le premier terminal (TTUA) est destiné à un autre terminal (TTUB), après mise en garde de la communication, l'utilisateur du terminal qui a décroché compose le numéro du destinataire, au décroché de ce dernier et après raccrochage du premier terminal (TTUA), la connexion est établie par le micro-ordinateur (10).

5. Système selon la revendication 4,
**caractérisé en ce que** le susdit micro-ordinateur (10) est programmé pour assurer des communications locales entre les susdits terminaux (TTUA, TTUB, TTUC).

6. Système selon la revendication 1 comprenant une pluralité de micro-ordinateurs (36, 39, 40) associés chacun à un groupe de terminaux téléphoniques (30 à 37) du type susdit, lesdits micro-ordinateurs (36, 39, 40) étant connectés à un réseau local et comportant chacun une carte Ethernet,
dont lesdits micro-ordinateurs (38 à 40) sont programmés de manière à constituer un autocommutateur réparti, le logiciel de cet autocommutateur étant présent dans tous les micro-ordinateurs et comprenant au moins les modules suivants :
- un module "échanges USB." chargé d'identifier et de mettre en forme les messages circulant sur le bus USB, d'analyser l'en-tête de chaque message afin d'aiguiller les données,
- un module de "signalisation" qui gère la signalisation téléphonique du terminal téléphonique USB,
- un module de "traitement d'appel" qui communique avec les différents modules de traitement d'appel des autres micro-ordinateurs du réseau afin de connaître l'état des différents terminaux téléphoniques USB et d'être en mesure de choisir une ligne RTC libre lors d'un appel sortant,
- un module d'"acheminement" contenant les informations sur les terminaux téléphoniques du système sur les actions à prendre en fonction du terminal téléphonique considéré, des événements et de l'état de la ligne, et sur le plan de numérotage,
- un module "commutation" qui effectue et coupe les connexions audio à l'intérieur du micro-ordinateur,
- un module "système opératoire téléphonique" (SOT) qui coordonne les modules téléphoniques à l'intérieur d'un même micro-ordinateur, gère les temporisations et lance chaque module logiciel avec la récurrence nécessaire.

7. Système selon la revendication 6,
**caractérisé en ce que** le logiciel du susdit autocommutateur réparti présent dans tous les micro-ordinateurs comprend en outre :
- un module "maintenance" (MNT) qui interroge régulièrement les différents modules ayant des interfaces matériels qui effectuent les contrôles demandés et renvoient un compte rendu et éventuellement en cas de problème, un message d'alerte à destination d'un module administration, et/ou
- un module "audit" (AUD) qui s'occupe de la vérification de la cohérence des données téléphoniques et, en cas de problème, envoie un message d'alerte au module d'administration, et/ou
- un module "mesure" (MES) qui archive l'ensemble des données du trafic concernant les terminaux téléphoniques raccordés sur le bus du micro-ordinateur, ce module effectuant sur demande des traitements sur ces données, et/ou
- un module "interface utilisateur" (IUT) permettant de visualiser, de façon élémentaire, l'état des communications.

8. Système selon l'une des revendications 6 et 7 adapté à faire intervenir plusieurs micro-ordinateurs montés dans un réseau comprenant une machine d'administration, dont cette machine d'administration comprend un module logiciel "interface administrateur" (IAD) venant en complément des autres modules logiciels des micro-ordinateurs du réseau qui communiquent entre eux grâce au susdit bus et à des liaisons Internet/Intranet (TCP/IP).

9. Système selon la revendication 6,
**caractérisé en ce que** la programmation des susdits micro-ordinateurs (38 à 40) est conçue de manière à :
- aiguiller un appel entrant sur un premier terminal téléphonique USB d'une liste de terminaux téléphoniques contenant l'ensemble des terminaux téléphoniques (30 à 37) du réseau, si ce premier terminal est occupé, à diriger l'appel entrant vers un second terminal téléphonique de la liste, et ainsi de suite jusqu'au dernier terminal de la liste,
- choisir une ligne téléphonique libre (41 à 43) pour passer une communication téléphonique vers l'extérieur,
- établir une communication locale entre deux terminaux téléphoniques USB sur le même bus USB ou par l'utilisation d'une liaison Ethernet sous TCP/IP,
- faire un transfert d'une communication téléphonique USB à un autre terminal téléphonique USB.

10. Système selon la revendication 1,
**caractérisé en ce que** le susdit ensemble de modules logiciels comprend un sous-ensemble de base fourni avec le terminal et des sous-ensembles spécifiques aux besoins des utilisateurs.

## Claims

1. A telephone system comprising:
- a plurality of telephone terminals, at least one of which being connected to a telephone line (ATL) that constitutes one or several groups,
- at least one microcomputer (10) equipped with a series of software modules and a broadband bus,
- each of the said terminals of a group being connected to the same microcomputer via the said broadband bus,
each one of the said terminals comprising:
- a USB bus controller sub-assembly associated with a microcontroller (1).
- a station sub-assembly comprising a receiver and its interface circuits composed of a digital/analogical converter (4, 5), an adapter, as well as a dial keypad associated with a display,
- the connected terminal being further composed of a line sub-assembly comprising circuits serving as interface with the telephone line (ATL), the station sub-assembly and the connected terminal line sub-assembly being connected to an address/data/audio bus (8) of the bus controller (1) sub-assembly, and whose
- liaison between the bus controller sub-assembly of each terminal and the associated microcomputer (10) comprises at least three channels, namely:
- channel (A) for the transfer of data between the microcomputer (10) and the telephone terminals,
- an audio channel (C) allocated to the receiver/microcomputer bi-directional liaison, and
- for the terminal linked to the telephone line, an audio channel allocated to the microcomputer/telephone line liaison,
the above channels enabling to establish telephone calls between the said line and the said terminals and/or between the said terminals.

2. A system according to claim 1,
**characterised in that** the terminal (TTUA) linked to the telephone line is designed in such a manner as to emit and to receive telephone calls, even in the event of a power failure.

3. A system according to one of claims 1 and 2,
**characterised in that** the "line" sub-assembly includes a digital/analogical converter in the case of an analogical telephone line (ATL) and/or an adapter for ensuring a digital liaison between the bus (8) and a telecommunications' integrated services digital network (bus So).

4. A system according to claim 1,
**characterised in that** the said microcomputer (10) is programmed in such a manner as to act as a small-scale automatic branch exchange, the capacity of which being equal to the number of telephone terminals, and to perform the following sequential operations:
- in the case where a first terminal (TTUA) wishes to establish an outgoing call, upon dialling the external call prefix, it requests a line to the microcomputer (10), the latter being unable to accept if both lines (LT₁, LT₂) are busy (and possibly other lines, where appropriate); if this is not the case, it establishes an audio connection between a vacant line, for example (LT₂) and the terminal (TTUA) through the intermediary of its automatic branch exchange module; it then commands activation of the selected line in order for the first terminal (TTUA) to be able to dial a number;
- in the case where an external incoming call taken by the first terminal (TTUA) is intended for another terminal (TTUB), once the call has been put on hold, the user of the terminal having initially picked up the call dials the number of the person being called; once the latter takes the call and the first terminal (TTUA) hangs up, connection is established by the microcomputer (10).

5. A system according to claim 4,
**characterised in that** the aforementioned microcomputer (10) is programmed in order to ensure internal calls between the above terminals (TTUA, TTUB, TTUC).

6. A system according to claim 1 comprising a plurality of microcomputers (36, 39, 40), each one associated with a group of telephone terminals (30 to 37) of the aforementioned type, the said microcomputers (36, 39, 40) being connected to a local network, each one comprising an Ethernet card,
the said microcomputers (38 to 40) of which, being programmed in order to constitute a shared automatic branch exchange, the software of such automatic branch exchange being located in every microcomputer and comprising at least the following modules:
- a "USB exchange" module aimed at identifying and organising messages circulating on the USB bus, and at analysing the title of each message in order to properly direct the data,
- a "signalling" module that manages the telephone signalling of the USB telephone terminal,
- a "call processing" terminal which communicates with the various call-processing modules of the other microcomputers on the network in order to know the status of the various USB telephone terminals and to be in a position to choose a vacant STN line for an outgoing call,
- a "dispatch" module containing data on the system's telephone terminals concerning the actions to be taken in accordance with the telephone terminal being considered, the various events and the status of the line, as well as the dialling programme,
- an "automatic branch exchange" module that activates and cuts audio connection inside the microcomputer,
- a "telephone operating system" (TOS) that coordinates the telephone modules inside a same microcomputer, manages the time delay and launches each software module with the necessary recurrence.

7. A system according to claim 6,
**characterised in that** the software of the aforementioned shared automatic branch exchange located in each microcomputer further comprises:
- a "maintenance" module (MNT) that regularly interrogates the various modules having material interfaces that implement the requested controls and send back a report with possibly, in the event of a problem, a warning message to the attention of an administrator module, and/or
- an "audit" module (AUD) that handles verification of the coherence of the telephone data with, in the event of a problem, dispatch of a warning message to the administrator module, and/or
- a "measurement" module (MES) that files all data of the traffic concerning the telephone terminals connected to the bus of the microcomputer, such module implementing the processing of said data upon request, and/or.
- a "user interface" (USI) module enabling to visualise, in all simplicity, the status of calls.

8. A system according to one of the claims 6 or 7, adapted to enable intervention by several microcomputers assembled within a network, comprising one administrator machine, such administrator machine of which comprising an "administrator interface" (ADI) software module serving as a complement to the other network microcomputer software modules that communicate with each other due to the aforementioned bus and to the Internet/Intranet (TCP/IP) liaisons.

9. A system according to claim 6,
**characterised in that** the programming of the aforementioned microcomputers (38 to 40) is designed in order to:
- properly direct an incoming call onto a first USB telephone terminal of a list of telephone terminals containing all the telephone terminals (30 to 37) of the network and, should this first terminal be busy, to direct the incoming call towards a second telephone terminal in the list, and so forth, until reaching the last terminal in the list,
- choose a vacant telephone line (41 to 43) for dispatching a telephone call outside,
- establish an internal call between two USB telephone terminals on the same USB bus or by using an Ethernet liaison under TCP/IP,
- transfer a USB telephone call to another USB telephone terminal.

10. A system according to claim 1,
**characterised in** the said assembly of software modules comprises a base sub-assembly, equipped with the terminal and the sub-assemblies specific to the needs of users.

## Patentansprüche

1. Telefonsystem bestehend aus:
- einer Vielzahl an Telefonterminals, von denen zumindest eines an eine Telefonleitung (LTA) angeschlossen ist, die eine oder mehrere Gruppen bilden,
- zumindest einem Mikrocomputer (10), der mit einer Einheit an Softwaremodulen und einem Breitband-Bus ausgestattet ist.
- wobei jedes der besagten Terminals einer Gruppe über den besagten Breitband-Bus mit demselben Mikrocomputer verbunden ist,
und jedes der besagten Terminals folgendes enthält:
- eine USB Buskontroll-Unterbaugruppe, die einem Mikrokontroller (1) zugeordnet ist,
- eine Geräte-Unterbaugruppe mit einem Hörer und seinen Schnittstellenkreisen mit einem Digital/Analog-Wandler (4, 5), einem Adapter, sowie einer Tastatur zum Wählen, die einer Anzeige zugeordnet ist,
- wobei das angeschlossene Terminal darüber hinaus eine Leitungs-Unterbaugruppe enthält, in der Schnittstellenkreise mit der Telefonleitung (LTA) enthalten sind, wobei die Geräte-Unterbaugruppe und die Leitungs-Unterbaugruppe des angeschlossenen Terminals mit einem Adress-/Daten-/Audio-Bus (8) der Buskontroll-Unterbaugruppe (1) verbunden sind, und wobei
- die Verbindung zwischen der Buskontroll-Unterbaugruppe jedes Terminals und dem zugeordneten Mikrocomputer (10) zumindest drei Kanäle enthält, nämlich:
- einen Kanal (A) für die Datenübertragung zwischen dem Mikrocomputer (10) und den Telefonterminals,
- einen Audio-Kanal (C) für die bidirektionale Verbindung zwischen dem Hörer und dem Mikrocomputer
- und, bezüglich des an die Telefonleitung angeschlossenen Terminals, einen Audio-Kanal (B), der für die Verbindung zwischen dem Mikrocomputer und der Telefonleitung zuständig ist,
wobei mit den oben genannten Kanälen Telefongespräche zwischen der besagten Leitung und den besagten Terminals und/oder zwischen den besagten Terminals aufgebaut werden können.

2. System nach Anspruch 1,
**dadurch gekennzeichnet, dass** das Terminal (TTUA), das mit der Telefonleitung verbunden ist, so gestaltet ist, dass es Telefongespräche selbst im Falle eines Stromausfalls senden und empfangen kann.

3. System nach einem der Ansprüche 1 und 2,
**dadurch gekennzeichnet, dass** die Unterbaugruppe "Leitung" im Falle einer analogen Leitung (LTA) einen Digital/Analog-Wandler und/oder einen Adapter enthält, der dazu bestimmt ist, eine digitale Verbindung zwischen dem Bus (8) und einem digitalen Telekommunikationsnetz mit einem integrierten Service (bus So) aufzubauen.

4. System nach Anspruch 1,
**dadurch gekennzeichnet, dass** der besagte Mikrocomputer (10) derart programmiert ist, dass er die Aufgabe einer Vermittlungseinrichtung mit geringer Kapazität übernimmt, deren Kapazität der Anzahl der Telefonterminals entspricht, und die folgende Betriebssequenzen abzuarbeiten hat:
- für den Fall, dass ein erstes Terminal (TTUA) ein ausgehendes Gespräch aufbauen will, indem die Vorwahl für ein externes Gespräch gewählt wird, fordert sie beim Mikrocomputer (10) eine Leitung an, der dann negativ reagiert, wenn die beiden Leitungen (LT1, LT2) (und eventuell auch die anderen Leitungen) besetzt sind; ist dies nicht der Fall, stellt er über sein Verbindungsmodul eine Audio-Verbindung beispielsweise zwischen der freien Leitung (LT2) und dem Terminal (TTUA) her; danach steuert er das Abheben der ausgewählten Leitung so an, dass das besagte erste Terminal (TTUA) wählen kann;
- für den Fall, dass ein eingehender externer Anruf, der vom ersten Terminal (TTUA) übernommen wurde, für ein anderes Terminal (TTUB) bestimmt war, wählt der Benutzer des Terminals, das abgehoben hat, nach einem entsprechenden Hinweis die Nummer des Adressaten, wobei dann vom Mikrocomputer (10) die Verbindung nach dem Abheben von Letzterem und nach dem Auflegen des ersten Terminals (TTUA) hergestellt wird.

5. System nach Anspruch 4,
**dadurch gekennzeichnet, dass** der oben genannte Mikrocomputer (10) programmiert ist, um lokale Gespräche zwischen den oben genannten Terminals (TTUA, TTUB, TTUC) zu ermöglichen.

6. System nach Anspruch 1 mit einer Vielzahl an Mikrocomputern (36, 39, 40), die jeweils einer Gruppe an Telefonterminals (30 bis 37) in der oben genannten Art zugeordnet sind, wobei die besagten Mikrocomputer (36, 39, 40) an ein lokales Netz angeschlossen sind und jeder von ihnen eine Ethernet-Karte enthält,
wobei die genannten Mikrocomputer (38 bis 40) so programmiert sind, dass sie eine verteilte Vermittlungseinrichtung bilden, wobei die Software dieser Vermittlungseinrichtung in allen Mikrocomputern vorhanden ist und diese zumindest folgende Module enthalten:
- ein "USB-Austausch-Modul" zur Identifizierung und Formatierung der Nachrichten im USB-Bus und zur Auswertung der Kopfleiste jeder Nachricht zur entsprechenden Weiterleitung der Daten,
- ein "Signalisierungsmodul", das die Telefonsignalisierung des USB Telefonterminals verwaltet,
- ein "Anrufbearbeitungsmodul", das mit den verschiedenen Anrufbearbeitungsmodulen der anderen Mikrocomputer des Netzes kommuniziert, um den jeweiligen Status der verschiedenen USB Telefonterminals zu erkennen und um in der Lage zu sein, eine freie RTC Leitung bei einem ausgehenden Anruf auszuwählen,
- ein "Zuordnungsmodul" mit Informationen über die Telefonterminals des Systems hinsichtlich der zu treffenden Handlungen in Abhängigkeit vom jeweiligen Telefonterminal, von den Ereignissen und dem Leitungsstatus und in Bezug auf die Nummernwahl,
- ein ""Vermittlungsmodul", das die Audio-Verbindungen innerhalb des Mikrocomputers aufbaut und unterbricht,
- ein Modul für das "Telefonbetriebssystem" (SOT), das die Telefonmodule innerhalb ein und desselben Mikrocomputers koordiniert, die Verzögerungen verwaltet und jedes Softwaremodul mit der nötigen Wiederholhäufigkeit ansteuert.

7. System nach Anspruch 6,
**dadurch gekennzeichnet, dass** die Software der oben genannten verteilten Vermittlungseinrichtung, die in allen Mikrocomputern vorhanden ist, darüber hinaus folgendes enthält:
- ein "Wartungsmodul" (MNT), das die verschiedenen Module regelmäßig abfragt, mit materiellen Schnittstellen, die die angeforderten Kontrollen durchführen, und die einen Bericht und eventuell, im Falle eines Problems, eine Warnung an ein Verwaltungsmodul senden, und/ oder
- ein "Audit"-Modul (AUD), das sich um die Überprüfung der entsprechenden Kohärenz der Telefondaten kümmert und, im Falle eines Problems, eine Warnung an ein Verwaltungsmodul sendet, und/ oder
- ein "Messmodul" (MES), das die Gesamtheit der ausgetauschten Daten zwischen den Telefonterminals, die an den Bus des Mikrocomputers angeschlossen sind, archiviert, wobei dieses Modul auf Anfrage eine Verarbeitung der Daten durchführt, und/oder
- ein "Benutzerschnittstellen-Modul" (IUT), mit dem der jeweilige Kommunikationsstatus in einfacher Form angezeigt werden kann.

8. System nach einem der Ansprüche 6 und 7, das so angepasst ist, dass es mehrere Mikrocomputer einbeziehen kann, die in einem Netz mit einer Verwaltungsmaschine verkettet sind, wobei diese Verwaltungsmaschine ein Software-Modul "Verwalterschnittstelle" (IAD) enthält, das als Ergänzung zu den anderen Software-Modulen der Mikrocomputer im Netz fungiert, die dank des oben genannten Busses und der Internet/Intranet Verbindungen (TCP/IP) miteinander kommunizieren.

9. System nach Anspruch 6,
**dadurch gekennzeichnet, dass** die Programmierung der oben genannten Mikrocomputer (38 bis 40) so erfolgt, dass:
- ein eingehender Anruf auf ein erstes USB Telefonterminal aus einer Liste an Telefonterminals, die aus der Einheit der Telefonterminals (30 bis 37) des Netzes besteht, umgeleitet wird, wenn dieses erste Terminal besetzt ist, der eingehende Anruf an ein zweites Telefonterminal aus der Liste weitergeleitet wird, und so weiter, bis zum letzten Terminal in der Liste,
- eine freie Telefonleitung (41 bis 43) ausgewählt wird, um einen externen Telefonanruf zu tätigen,
- ein lokales Gespräch zwischen zwei USB-Telefonterminals auf demselben USB-Bus oder durch die Verwendung einer Ethernet-Verbindung unter TCP/IP aufgebaut wird,
- eine Umleitung eines USB Telefongespräches zu einem anderen USB-Telefonterminal erfolgt.

10. System nach Anspruch 1,
**dadurch gekennzeichnet, dass** die oben genannte Einheit an Softwaremodulen eine Basis-Unterbaugruppe enthält, die mit dem Terminal mitgeliefert wird, sowie spezielle Unterbaugruppen für die jeweiligen Bedürfnisse der Benutzer.
